# EUROPÄISCHE PATENTANMELDUNG

(11) **EP 0 544 239 A2**
(43) Veröffentlichungstag der Anmeldung: **02.06.1993**
(21) Anmeldenummer: 92120022.6
(22) Anmeldetag: 25.11.1992
(51) Int. Cl.: F16P 3/14, H01Q 25/00

(54) **Vorrichtung zum Sichern eines begrenzten Arbeitsbereichs**

(30) Priorität: 25.11.1991 DE 4138641; 19.10.1992 DE 4235161
(71) Anmelder: Kalkoffen, Michael, 41470 Neuss (DE)
(72) Erfinder: List, Einar, Dr., W-1722 Grossbeeren (DE); Kalkoffen, Michael, W-4040 Neuss 21 (DE)
(74) Vertreter: COHAUSZ HASE DAWIDOWICZ & PARTNER

(57) **Zusammenfassung**

Die Erfindung betrifft eine Vorrichtung zum Sichern eines begrenzten Arbeitsbereichs gegen das Eindringen eines Körperteils mit einem den Arbeitsbereich überdeckenden Feld F1 elektrischer Wellen, wobei mindestens ein weiteres Feld F2 elektrischer Wellen vorgesehen ist, das das erste Feld F1 zu einem Teil überlappt, wobei der überlappende Bereich 4 beider Felder den Sicherheitsbereich bildet, in dem ein Sensor 5 oder ein Empfangs- und Sendegerät ein Signal insbesondere zum Abschalten einer Maschine erzeugt, und daß in dem ersten und dem weiteren Feld außerhalb des überlappenden Bereichs 4 der Sensor 5 oder das Empfangs- und Sendegerät nicht anspricht.

## Beschreibung

Die Erfindung betrifft eine Vorrichtung zum Sichern eines begrenzten Arbeitsbereichs gegen das Eindringen eines Körperteils mit einem den Arbeitsbereich überdeckenden Feld elektrischer Wellen.

Bekannte Anordnungen wie Lichtschranken, Mikrowellenschranken und kapazitive Näherungsdetektoren, deren Wirkung auf der passiven Beeinflussung eines definiert aufgebauten Feldes durch das zu schützende Objekt basiert, versagen bei der zuverlässigen Unterscheidung zwischen dem zulässigen Eindringen eines Werkstückes in den verbotenen Bereich und dem unzulässigen Eindringen von Körperteilen des Bedieners.

Das französische Patent 1 564 099 schlägt vor, den gefährlichen Bereich mit einem Feld zu durchfluten und am zu schützenden Körperteil einen Empfänger anzubringen, der das Eindringen in das Feld detektiert. Ähnlich ist der Vorschlag im Deutschen Reichspatent 646199, den Gefahrenbereich mit einem elektromagnetischen Wechselfeld zu durchsetzen, so daß beim Hantieren in der gefährlichen Zone über den Körper des Bedienenden einer Empfangseinrichtung elektrische Energie zugeführt wird, die über eine Betätigungsvorrichtung Schalthandlungen auslöst. US-Patent 4532501 schlägt eine Anordnung vor, bei der ein Feldgenerator am zu schützenden Körperteil angebracht oder der Körper selbst als Antenne des Generators dient und an der Maschine eine Empfängerschaltung mit kapazitiv wirkender Antenne den Abstand zum Generator auswertet.

Diesen Anordnungen ist gemeinsam, daß am zu schützenden Gegenstand entweder ein Sender oder ein Empfänger elektromagnetischer Felder angebracht wird und so Schwierigkeiten bei der Unterscheidung zwischen Werkstück und z.B. Körperteilen des Menschen beseitigt werden. Mit diesen Anordnungen kann jedoch die Sicherung eines von mehreren Seiten vom Bediener erreichbaren Gefahrenbereiches nur bei sehr speziellen Geometrien der Maschine oder Anlage bewerkstelligt werden.

Aufgabe der Erfindung ist es, eine einfache sicher arbeitende Vorrichtung zu schaffen, welche die Sicherung eines Raumvolumens erlaubt, das aus fast allen Richtungen erreicht werden kann.

Erfindungsgemäß wird die Aufgabe dadurch gelöst, daß mindestens ein weiteres Feld elektrischer Wellen vorgesehen ist, das das erste Feld zu einem Teil überlappt, wobei der überlappende Bereich beider Felder den Sicherheitsbereich bildet, in dem ein Sensor oder ein Empfangs- und Sendegerät ein Signal insbesondere zum Abschalten einer Maschine erzeugt und daß in dem ersten und dem weiteren Feld außerhalb des überlappenden Bereichs der Sensor oder das Empfangs- und Sendegerät nicht anspricht.

Der zu schützende Raum wird von den Feldern mehrerer Antennen so durchflutet, daß dieser Raum durch den räumlichen Überlappungsbereich der Antennenfelder gefüllt wird und ein am zu schützenden Gegenstand bzw. Körperteil angebrachter Empfangs- und Sendebaustein nur beim Empfang der Information aller Antennen ein Signal abstrahlt, das von einer an die Antennen angeschlossenen Empfangseinheit ausgewertet wird. Die Identifikation der von den verschiedenen Antennen erzeugten Felder kann dabei auf verschiedene Weise geschehen, entweder durch unterschiedliche Sendefrequenzen oder durch unterschiedliche aufmodulierte Information oder durch zeitlich versetztes, zyklisch aufeinanderfolgendes Senden.

So ist es möglich, das Eindringen des zu schützenden Gegenstandes mit dem angebrachten Sende- und Empfangsbaustein in einen sogar von allen Seiten frei zugänglichen Raum zu detektieren.

Da die Wirksamkeit dieser Sicherheitseinrichtung daran gebunden ist, daß ein funktionsfähiger Empfangs- und Sendebaustein tatsächlich am zu schützenden Gegenstand vorhanden ist, wird die Maschinensteuerung zweckmäßigerweise so geschaltet, daß sich die Maschine erst nach einmaligem Einbringen des Empfangs- und Sendebausteins in den verbotenen Bereich mit einer Zeitverzögerung in Betrieb setzen läßt.

Für eine noch genauere Ortsbestimmung des Sensors und damit für eine noch größere Sicherheit wird vorgeschlagen, daß das oder die Empfangsgerät(e) (E) nur in einem bestimmten Winkelbereich empfangen und hierdurch den Gefahrenbereich eingrenzen.

Besonders vorteilhaft ist es, wenn das oder die Empfangsgerät(e) die Entfernung des Sensors zum Empfangsgerät mißt (messen) und nur in einem bestimmten Abstandsbereich des Sensors vom Empfänger oder von den Empfängern das Alarm- und/oder Schaltsignal ausgelöst wird. Durch diese Abstandsmessung kann der Gefahrenbereich noch genauer erfaßt und eingegrenzt werden. Der Gefahrenbereich kann hierdurch sogar in zwei oder mehr Zonen eingeteilt werden, die insbesondere jeweils eine verschieden große Gefahr darstellen. Hierzu wird alternativ oder zusätzlich vorgeschlagen, daß das oder die Empfangsgerät(e) die Entfernung des Sensors zum Empfangsgerät mißt (messen) und nur in einem bestimmten Abstandsbereich des Sensors vom Sender oder von den Sendern das Alarm- und/oder Schaltsignals ausgelöst wird.

Ausführungsbeispiele der Erfindung sind in den Zeichnungen dargestellt und werden im folgenden naher erläutert. Es zeigen:
- Figur 1:: Ein erstes Ausführungsbeispiel in einer Ansicht.
- Figur 2:: Ein zweites Ausführungsbeispiel in einer Ansicht.

Ein Raum, der den zu schützenden Raum enthält, aber größer ist als dieser, wird von den Feldern mehrerer Antennen so durchflutet, daß er durch deren Überlappungsbereich ausgefüllt wird.

Haben die Sensoren eine ausgeprägte Richtcharakteristik, wird auf die Identifikation der verschiedenen Antennenfelder F1, F2 im Sensor verzichtet. Der Sensor strahlt ein Signal ab, sobald auf ihn das Feld mindestens einer Antenne mit genügender Stärke einwirkt. Die Antennen sind so angeordnet, daß innerhalb des Überlappungsbereiches bei jeder möglichen räumlichen Orientierung des Sensors seine Aktivierung erfolgt.

Das vom Sensor nach seiner Aktivierung abgestrahlte Signal wird von mindestens zwei räumlich voneinander getrennten Empfängern aufgenommen. Das Verhältnis der Empfangspegel an den Empfänger wird in einem analogen oder digitalen Rechenwerk bestimmt. So sind je nach Anzahl der verwendeten Empfänger ein bis drei Koordinaten der Position des Sensors zu berechnen.

Aus dem Vergleich der berechneten Position des Sensors mit den Koordinaten der unmittelbaren Gefahrenzone werden im Rechenwerk Schalthandlungen abgeleitet. So kann bereits vor dem Eintreten höchster Gefahr ein Warnsignal ausgelöst werden, was die Häufigkeit des Not-Ausschaltens der Maschine stark herabsetzt.

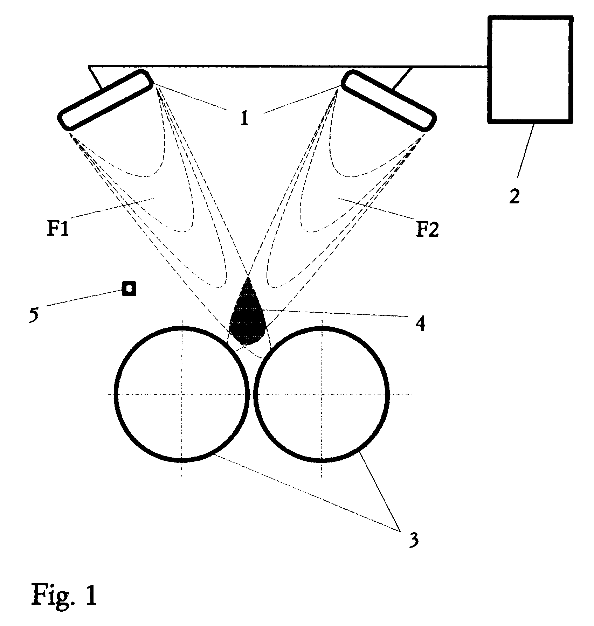

Figur 1 zeigt in der Seitenansicht die Anordnung an einem Walzwerk, an dem z.B. Gummimischungen hergestellt werden. Zwei mit der stationären Sende- und Empfangseinheit 2 verbundene Antennen 1 sind in größerem Abstand zu den Walzen 3 angeordnet. Der Raum 4 über dem Walzenspalt ist der verbotene Bereich, in den der Bediener des Walzwerkes bei laufenden Walzen nicht mit seinen Händen geraten darf. Die geometrische Anordnung der Antennen 1 bewirkt zusammen mit der Ansteuerung durch die Sende- und Empfangseinheit 2, daß die von den Antennen 1 erzeugten Felder sich nur im verbotenen Gefahrenbereich 4 mit einer bestimmten Feldstärke überlappen. Das an der Hand der Bedienperson befestigte Empfangs- und Sendegerät 5 sendet nur, wenn es die Felder beider Antennen mit mindestens dieser Feldstärke empfängt. Die Unterscheidung der Felder beider Antennen wird in diesem Beispiel so vorgenommen, daß dem Feld jeder Antenne 1 eine unterschiedliche digitale Information aufmoduliert ist. Das Empfangs- und Sendegerät 5 empfangt kontinuierlich und sendet, wenn die empfangene Information der Überlagerung der von den Antennen abgestrahlten Information entspricht. Das ist der Fall, wenn das Empfangs- und Sendegerät in den verbotenen Bereich eingeführt wird. Der Sendeimpuls des Empfangs- und Sendegerätes 5 wird von den Antennen 1 empfangen und in der Empfangs- und Sendeeinheit 2 in eine Notausschalthandlung des Walzwerkes umgesetzt. Besonders vorteilhaft ist diese Anordnung, weil der Bediener in weiterem Abstand zum Spalt zwischen den Walzen 3 in den Feldern der einzelnen Antennen 1 beliebig hantieren kann, ohne die Notausschaltung des Walzwerkes herbeizuführen.

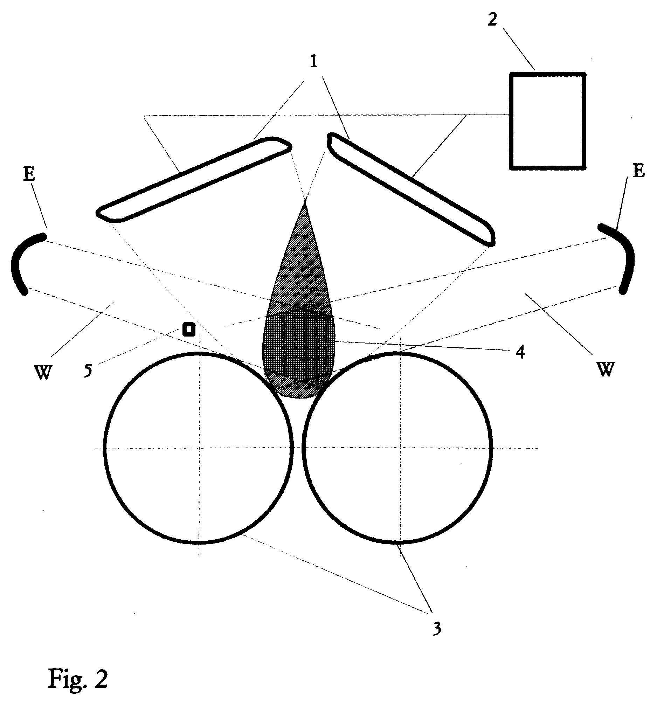

Im zweiten Ausführungsbeispiel nach Figur 2 ist innerhalb des Überlappungsbereiches der Strahlung beider Sendeantennen 1 ein noch kleinerer Bereich als Gefahrenbereich 4 angeordnet, der dadurch abgegrenzt ist, daß die Empfänger E nur in bestimmten eingeschränkten Winkelbereichen W empfangen und/oder den Abstand zwischen dem Empfangs- und Sendegerät (Sensor) 5 und dem Empfänger E messen (z.B. durch Messen der Feld/Strahlungs-Stärke oder Laufzeit) und damit den momentanen Ort des Sensors sehr genau bestimmen. Hierdurch kann der Gefahrenbereich 4 auch in mehrere Zonen verschieden großer Gefahr aufgeteilt werden.

## Patentansprüche

1. Vorrichtung zum Sichern eines begrenzten Arbeitsbereichs gegen das Eindringen eines Körperteils mit einem den Arbeitsbereich überdeckenden Feld (F1) elektrischer Wellen, **dadurch gekennzeichnet,** daß mindestens ein weiteres Feld (F2) elektrischer Wellen vorgesehen ist, das das erste Feld (F1) zu einem Teil überlappt, wobei der überlappende Bereich (4) beider Felder den Sicherheitsbereich bildet, in dem ein Sensor (5) oder ein Empfangs- und Sendegerät ein Signal insbesondere zum Abschalten einer Maschine erzeugt, und daß in dem ersten und dem weiteren Feld außerhalb des überlappenden Bereichs (4) der Sensor (5) oder das Empfangs- und Sendegerät nicht anspricht.

2. Vorrichtung nach Anspruch 1, **dadurch gekennzeichnet,** daß mindestens zwei Sendeantennen (1) so angeordnet sind, daß der begrenzte Bereich (4) durch die räumliche Überlappung der von den Antennen erzeugten Felder (F1, F2) nachgebildet wird und die am zu sichernden Gegenstand befestigten Empfangs- und Sendegeräte (5) nur im Überlappungsbereich der Antennenfelder Signale senden.

3. Vorrichtung nach Anspruch 2, **dadurch gekennzeichnet,** daß von den Antennen (1) kontinuierlich Energie mit für jede Antenne unterschiedlicher aufmodulierter Information abgestrahlt wird und die Empfangs- und Sendegeräte (5) so programmiert sind, daß sie nur bei Empfang der Information von allen Antennen senden.

4. Vorrichtung nach Anspruch 2, **dadurch gekennzeichnet,** daß von den Antennen (1) in zeitlich zyklischer Aufeinanderfolge unmoduliert Energie abgestrahlt wird und die Empfangs- und Sendegeräte (5) so programmiert sind, daß sie nur bei zeitlich gleichmäßigem Empfang der angestrahlten Energie senden.

5. Vorrichtung nach einem der vorherigen Ansprüche, **dadurch gekennzeichnet,** daß von den Antennen (1) Energie unterschiedlicher Frequenzen abgestrahlt wird und die Empfangs- und Sendegeräte (5) so ausgelegt sind, daß sie nur bei hinreichend starkem Empfang aller verwendeten Frequenzen senden.

6. Vorrichtung nach einem der vorherigen Ansprüche, **dadurch gekennzeichnet,** daß das oder die Empfangsgerät(e) (E) nur in einem bestimmten Winkelbereich empfangen und hierdurch den Gefahrenbereich (4) eingrenzen.

7. Vorrichtung nach einem der vorherigen Ansprüche, **dadurch gekennzeichnet,** daß das oder die Empfangsgerät(e) (E) die Entfernung des Sensors (5) zum Empfangsgerät mißt (messen) und nur in einem bestimmten Abstandsbereich des Sensors vom Empfänger oder von den Empfängern das Alarm- und/oder Schaltsignal ausgelöst wird.

8. Vorrichtung nach einem der vorherigen Ansprüche, **dadurch gekennzeichnet,** daß das oder die Empfangsgerät(e) (E) die Entfernung des Sensors (5) zum Empfangsgerät mißt (messen) und nur in einem bestimmten Abstandsbereich des Sensors vom Sender (1) oder von den Sendern das Alarm- und/oder Schaltsignals ausgelöst wird.
